# EUROPEAN PATENT SPECIFICATION

(11) **EP 1 758 303 B1**
(45) Date of publication and mention of the grant of the patent: **11.02.2009**
(21) Application number: 05255251.0
(22) Date of filing: 25.08.2005
(51) Int. Cl.: H04W 12/12

(54) **Rogue access point detection and restriction**
Erkennung und Einschränkung eines nichtauthorisierten Zugangspunktes
Détection et limitation d'un point d'accès sans fil non autorisé

(43) Date of publication of application: 28.02.2007
(73) Proprietor: Research In Motion Limited, Waterloo, Ontario N2L 3W8 (CA)
(72) Inventor: Wang, James J. Y., Ontario L4C 9H3 (CA); Dunk, Craig A., Ontario N1L 1P2 (CA); Chen, Michael Y. S., Ontario N2M 5G1 (CA)
(74) Representative: Roberts, Gwilym Vaughan

(56) References cited:
- EP-A- 0 889 661
- US-A1- 2003 135 762
- US-A1- 2005 171 720
- CHIRUMAMILLA M K ET AL: "Agent based intrusion detection and response system for wireless lans" ICC 2003. 2003 IEEE INTERNATIONAL CONFERENCE ON COMMUNICATIONS. ANCHORAGE, AK, MAY 11 - 15, 2003, IEEE INTERNATIONAL CONFERENCE ON COMMUNICATIONS, NEW YORK, NY : IEEE, US, vol. VOL. 1 OF 5, 11 May 2003 (2003-05-11), pages 492-496, XP010642798 ISBN: 0-7803-7802-4

## Description

### BACKGROUND

### Field

The invention relates generally to networks and, more particularly, to networks that utilize a wireless connection.

### Background Information

Numerous types of electronic devices are known. Examples of such electronic devices include, for instance, personal data assistants (PDAs), handheld computers, two-way pagers, cellular telephones, laptops, and the like. Many electronic devices are capable of wireless communication with a network.

One type of wireless communication network is referred to as a wireless local area network (WLAN). A WLAN may comply, for example, with one or more versions of the Institute of Electrical and Electronics Engineers' (IEEE) standard 802.11 (e.g., 802.11a; 802.11b; 802.11g). In one arrangement, WLAN's may include access points (AP) and a server (among others), and may further include clients. In another arrangement, WLAN's may include only clients. Decentralized WLAN's (e.g., networks in which access control functions are executed by the individual access points and/or the individual clients) may be referred to as "fat access point" networks, whereas centralized WLAN's (e.g., networks in which access control functions are executed by a server) may be referred to as "thin access point" networks.

Generally speaking, a client is an electronic device having a radio that facilitates wireless communication between the electronic device and the WLAN network. The radio may, for example, be implemented in a wireless networking card. The wireless networking card may contain an electronic memory, a transceiver, an, antenna, and an embedded integrated circuit (IC), among others. Generally, the wireless networking card is 802.11 compliant and allows the client to communicate with the network access points, other clients, etc., via radio signals.

An access point generally refers to a device that provides a point of interconnection between the client and the network. For example, the access point may be a hardware component having an 802.11 compliant transceiver for communicating with the client (i.e., via the client's wireless networking card). Each access point has at least one service set identifier (SSID) and one or more data channels associated therewith. To establish communication with the network, the client's wireless networking card must first obtain the access point's SSID and channel number. The wireless networking card may automatically detect the SSID and channel number for any access points within a given range (typically 0 to 100 meters) or the SSID and channel number may be manually entered by a user. The SSID may include several components, for example, an extended service set identifier (ESSID) and a basic service set identifier (BSSID). The ESSID number is typically used to identify the particular network to which an access point belongs. As a result, several access points (i.e., those on the particular network) may share a common ESSID number. It is also possible for an access device to have multiple ESSID's. The BSSID is unique for each access point belonging to an ESSID and thus may be used to identify a particular access point. If an access point has multiple ESSID's (e.g., two ESSID's), the access point will also have multiple unique BSSID's (e.g., two BSSID's, one for each ESSID).

Although WLAN networks are easy to construct and very convenient for users, they possess inherent security drawbacks. One such drawback relates to rogue access points. A "rogue access point" or "rogue AP" generally refers to an access point that is not authorized for operation by the network's administrator. For example, a rogue access point may include an access point on the network that fails to comply with the security policies established for the network and which, as a result, may allow a non-authorized client (i.e., non-authorized user) an open, non-secure interface to the network. As a further example, a rogue access point may refer to an access point for which a network client is not authorized to connect. For instance, a hacker may establish a rogue access point to emulate an authentic access point for the network. When a client attempts to log onto the network via the rogue access point, the hacker captures information related to the client. The hacker may use this captured information to impermissibly access the network.

Thus, a need exists for an improved wireless network that eliminates and/or manages the security issues related to wireless communication therein.

US-A1-2003/135762 discloses a wireless security system for monitoring wireless networks with a view to detecting and locating unauthorized or threatening wireless devices entering a wireless network. The security system includes a server having a listening post module operable to gather data from nearby wireless channels, which is then used by an analysis module to determine whether an unauthorized event is occurring. Upon determining that an unauthorized event is occurring, the server sends a signal to a hunter-seeker unit for use in manually neutralizing an intruder, or to a counter-measure agent for use in automatically denying access to an intruder. US-A1-2005/171720 discloses a method and apparatus for detecting a rogue access point of a wireless network, whereby the MAC address of an access point is checked against entries in a database.

### SUMMARY OF THE INVENTION

The invention is set out in the claims. According to a first aspect of this invention, there is provided a method for securing a network as defined in claim 1 of the appended claims. According to another aspect of this invention, there is provided a network as defined in claim 16. In at least some embodiments, the network is structured to enable communication between the first device and a client through at least one of the number of access points determined to be acceptable access points, and the network is structured to hinder the client from accessing the first device through at least one of the number of access points determined to be a rogue access point.

### BRIEF DESCRIPTION OF THE DRAWING

A full understanding of the invention can be gained from the following Description of the Preferred Embodiments when read in conjunction with the accompanying drawings in which:
Figure 1 is a plan view of an improved handheld electronic device that can be employed as a client in conjunction with an improved network.
Figure 2 is a schematic depiction of the handheld electronic device of Figure 1.
Figure 3 is a simplified diagram of a WLAN network according to one embodiment.
Figure 4 is a simplified diagram of a WLAN network according to another embodiment.
Figure 5 is a simplified diagram of the WLAN network illustrated in Figure 4 with updated access point lists.
Figure 6 illustrates the operational steps for securing the WLAN network illustrated in Figure 4.

### DESCRIPTION OF THE PREFERRED EMBODIMENTS

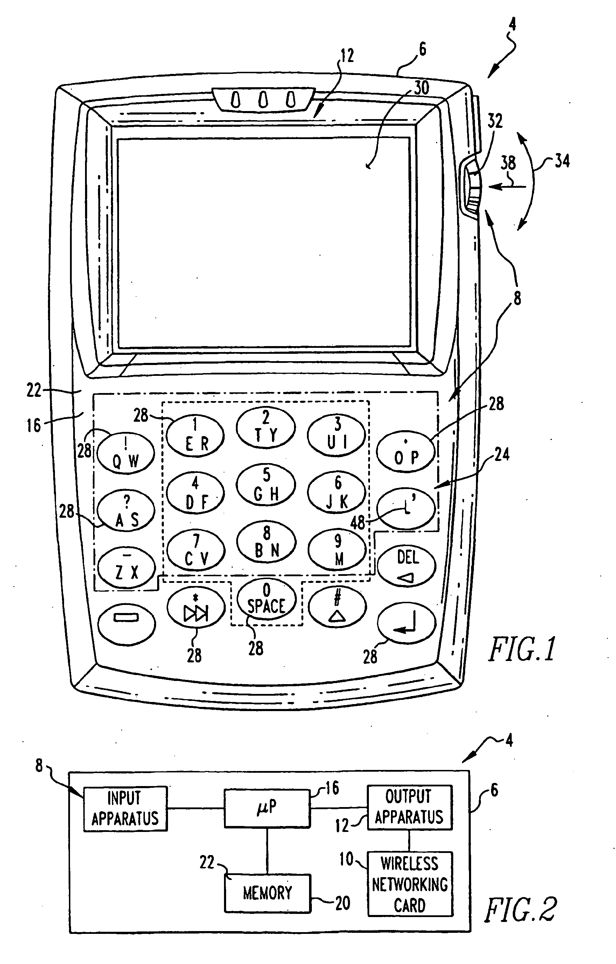

An electronic device 4 is indicated generally in Figure 1 and is depicted schematically in Figure 2. The exemplary electronic device 4 includes a housing 6 upon which are disposed a processor unit that includes an input apparatus 8, an output apparatus 12, a processor 16, and a memory 20. The housing 6 is adapted to carry the processor unit. The processor 16 may be, for instance and without limitation, a microprocessor (µP) and is responsive to inputs from the input apparatus 8 and provides output signals to the output apparatus 12. The processor 16 also interfaces with the memory 20. Examples of electronic devices are included in U.S. Patent Nos. 6,452,588 and 6,489,950, the disclosures of which are incorporated by reference herein.

As can be understood from Figure 1, the input apparatus 8 includes a keypad 24 and a thumbwheel 32. The keypad 24 is in the exemplary form of a reduced QWERTY keyboard including a plurality of keys 28 that serve as input members. The keys 28 are disposed on a front face of the housing 6, and the thumbwheel 32 is disposed at a side of the housing 6. The thumbwheel 32 can serve as another input member and is both rotatable, as is indicated by the arrow 34, to provide inputs to the processor 16, and also can be pressed in a direction generally toward the housing 6, as is indicated by the arrow 38, to provide other input to the processor 16. The output apparatus 12 includes a display 30 for displaying text, graphics, video, etc.

The memory 20, depicted schematically in Figure 2, can be any of a variety of types of internal and/or external storage media such as, without limitation, RAM, ROM, EPROM(s), EEPROM(s), and the like that provide a storage register for data storage such as in the fashion of an internal storage area of a computer, and can be volatile memory or nonvolatile memory. The memory 20 may include a number of routines depicted generally with the numeral 22 for the processing of data. The routines 22 can be in any of a variety of forms such as, without limitation, software, firmware, and the like. In the current embodiment, the memory 20 also includes a number of data sets identifying acceptable and/or rogue access points as will be discussed in greater detail below. As employed herein, the expression "a number of" and variations thereof shall refer broadly to any quantity, including a quantity of one.

The electronic device 4 also includes a wireless networking card 10. The wireless networking card 10 may contain an electronic memory, a transceiver, an antenna, and an embedded integrated circuit (IC), among others (none of which are shown in Figure 2). Generally, the wireless networking card 10 allows the electronic device 4 to communicate with a WLAN network via radio signals. Accordingly, the electronic device 4 may be referred to as a "client" for a network (e.g., the network 35 shown in Figure 35, the network 36 shown in Figure 36, etc.).

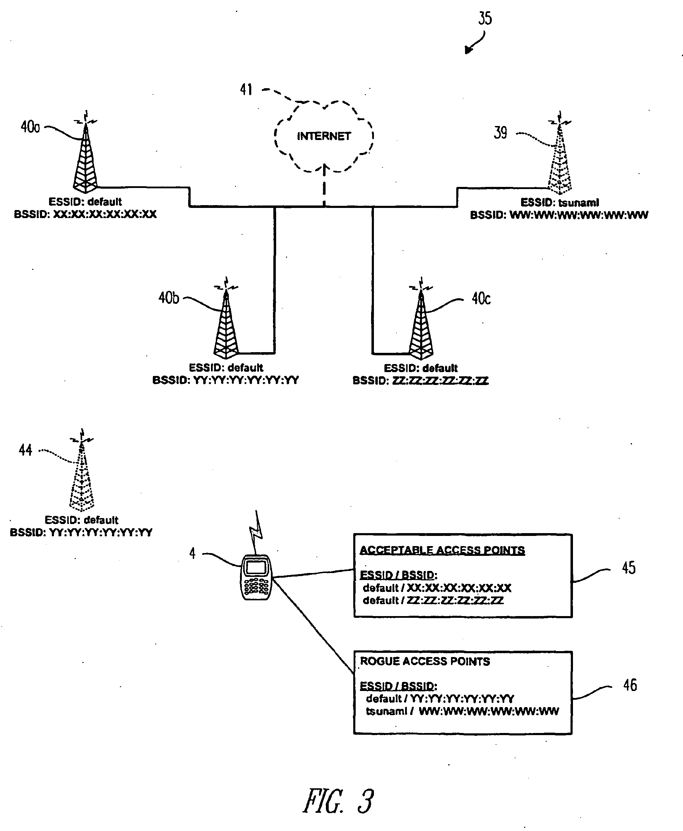

Figure 3 is a simplified diagram of a network 35 according to one embodiment. The network 35 is a WLAN network and includes a number of access points 40a - 40c which facilitate communication between electronic device 4 and the Internet 41. The access points 40a - 40c each execute the network access control functions locally. Accordingly, network 35 is an example of a "fat access point" network.

As used herein, the number of access points may include both "acceptable access points" and "rogue access points". An "acceptable access point" generally refers to an access point that is authorized by the network's administrator to connect a client to the network. As discussed above, a "rogue access point" generally refers to an access point that is not authorized for operation by the network's administrator. A rogue access point may include, for example, an access point on the network (e.g., 40a - 40c) that fails to comply with the security policies established for the network 35. Additionally, access point 39 and access point 44 in Figure 3 represent rogue access points. Access point 39 has an extended service set identifier (ESSID) that is not acceptable to the network 35; whereas access point 44 is not a part of network 35 but has been configured (by a hacker for instance) to emulate an acceptable access point for the network 35 (i.e., is a clone of access point 40b).

In the current embodiment, the electronic device 4 is structured to detect rogue access points and, in response to that detection, perform an action such as hinder its access to the network via the rogue access point. The term "hinder", as used herein, in intended to refer to impeding, obstructing, blocking, and/or barring a client and/or other electronic device from attempting to access and/or from actually accessing a network.

As illustrated in Figure 3 for example, the electronic device 4 has stored thereon (in memory 20 for example) a list of acceptable access points 45 and a list of rogue access points 46. Although both a list of acceptable access points 45 and a list of rogue access points 46 are used in the exemplary network illustrated in Figure 3, it should be noted a single list (i.e., either the list of acceptable access points 45 or the list of rogue access points 46) may be used while remaining within the scope of the present invention.

The list of acceptable access points 45 may include information associated with a number of the network's access points 40a - 40c. The information may include, for example and without limitation, the ESSID and BSSID associated with each of at least some of the access points 40a - 40c.

The list of rogue access points 46 may include information associated with a number of the network's access points 40a - 40c that are suspect (e.g., do not comply with all of the network's security protocols) and/or information associated with a number of access points that are not part of the network 35, such as access point 39 and access point 44. In the current example, access point 39 represents an access point that does not have an acceptable ESSID and access point 44 represents an access point that has been configured to mimic/clone (i.e., has been configured with the same ESSID and BSSID) one or more of the network's access points 40a - 40c. Like the information contained with in the list of acceptable access points 45, the information contained within the list of rogue access points 46 may include, for example and without limitation, the ESSID and BSSID associated with each rogue access point. For example, the ESSID and BSSID of the clone access point 44 (and thus, the access points 40b which is being cloned) are added to the list of rogue access points 46. It should be noted that the ESSID and the BSSID of access point 40b, if previously added to the list of acceptable access points 45, is removed from the list of acceptable access points 45 once the clone access point 44 is detected.

In the example shown in Figure 3, the list of acceptable access points 45 includes the ESSID, and BSSID associated with network access points which the electronic device 4 may employ to access the network 35. More specifically, the list of acceptable access points 45 includes the ESSID named "default" and the BSSID's XX:XX:XX:XX:XX:XX (i.e., the BSSID associated with access point 40a) and ZZ:ZZ:ZZ:ZZ:ZZ:ZZ (i.e., the BSSID associated with access point 40c). Likewise, the list of rogue access points 46 includes the ESSID and BSSID associated with network access points which the electronic device 4 may not employ to access the network 35. More specifically, the list of rogue access points 46 includes the ESSID named "default" and the BSSID YY:YY:YY:YY:YY:YY (i.e., the ESSID and BSSID associated with access point 40b and clone 44) and the ESSID named "tsunami" and the BSSID WW:WW:WW:WW:WW:WW (i.e., the ESSID and BSSID associated with access point 39). In the current example, access point 40b is considered to be a rogue access point because network has detected another access point (i.e., access point 44) with the identical ESSID (i.e., default) and BSSID (i.e., YY:YY:YY:YY:YY:YY), indicating that access point 40b has been cloned.

When in use, the electronic device 4 continuously probes the network 35 (i.e., tries to find the best connection to the network 35). Accordingly the electronic device 4 continuously detects and gathers information about access points within its vicinity. If a better connection is detected (e.g., an access point with a stronger radio signal than the access point currently used by the electronic device to access the network), the electronic device may attempt to roam (i.e., switch) from it current access point to the access point with the stronger radio signal. Although the discussion of the current example is limited to the electronic device 4 detecting and gathering information about access points, it should be noted that one access point can detect and gather information about another access point and use this information to determine whether the other access point is an acceptable or a rogue access point.

Assume, for example, that electronic device 4 is in a location that is close to access point 40a and thus, electronic device 4 is accessing the network 35 via access point 40a. Next assume that electronic device 4 is moved away from access point 40a towards the other access points 39, 40b - 40c, 44 such that the radio signals between access point 40a and the electronic device 4 begin to decrease in strength while the radio signals between access points 39, 40b - 40c, 44 and the electronic device 4 begin to increase in strength. As the electronic device 4 probes the network 35, it detects the other access points (i.e., access points 39, 40b - 40c, 44) and gathers information (e.g., the ESSID and BSSID) associated with them. The electronic device 4 may attempt to roam (i.e., switch) from access point 40a to one of the access points 39, 40b - 40c, 44 having a stronger radio signal.

The network 35, however, is structured such that the electronic device 4 will only access the network 35 via an acceptable access point. For example, the network 35 is structured to hinder the electronic device 4 from accessing the network 35 via access points that are not contained within the list of acceptable access points 45 and/or that are contained in the list of rogue access points 46. Accordingly, the electronic device 4 compares the information gathered to the list of acceptable access points 45 and/or the list of rogue access points 46. The electronic device 4 then determines whether any of the detected access devices (i.e., 39, 40b - 40c, 44) are allowable access points and/or are rogue access points. In the current example, only access points 40a and 40c may be used by the electronic device 4 to access the network 35. Thus, the electronic device 4 may roam from access point 40a to access point 40c; however, the electronic device 4 may not roam from access point 40a to access point 39, access point 40b, and/or access point 44.

It should be noted that a previously acceptable access point may be turned into a rogue access point at anytime, for example, if a clone of the previously acceptable access point is detected. In this instance, the ESSID and BSSID of the previously acceptable access point is removed from the list of acceptable access points 45 and added to the list of rogue access points 46. A client 4 that was accessing the network 35 via the previously acceptable access point at the time the clone is detected may be forced to disconnect from that previously acceptable access point.

In addition to hindering the client 4 from accessing the network 35 via a rogue access point as discussed above, other actions may be performed on/by the network 35 in response to detecting a rogue access point. Other actions that may be performed include, for example and without limitation, updating the list of acceptable access points 45 stored on the client 4, updating the list of rogue access points 46 stored on the client 4, continuously issuing disassociation requests from trusted access points such that any client 4 wishing to associate with the network 35 will continually be instructed to disassociate with a rogue access point (e.g., 39, 40b, and 44), flooding the rogue access point (e.g., 39, 40b, and 44), and locating the rogue access point (e.g., 39, 40b, and 44) through triangulation.

"Flooding" as used herein refers to overloading the rogue access point so that it is unable to service any connection request. For example, several clients 4 can continuously send requests to the rogue access point (e.g., 39, 40b, and 44) so that it is too busy to service those requests. "Triangulation" as used herein refers to using the radio signals emitted by an access point to find the position or location of that access point from the bearings of multiple other fixed points (e.g., three other access points) a known distance apart. Although both a list of acceptable access points 45 and a list of rogue access points 46 are used in the current example, the list of acceptable access points 45 or the list of rogue access points 46 may be solely employed while remaining within the scope of the present invention.

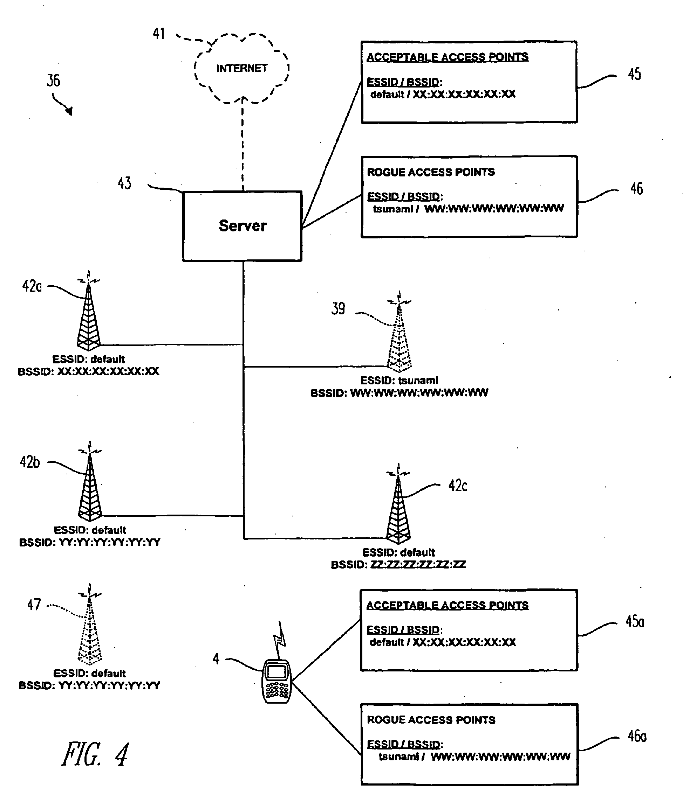

Figure 4 is a simplified diagram of a network 36 according to another embodiment. The network 36 is a WLAN network and includes a number of access points 42a - 42c which facilitate communication between electronic device (i.e., client) 4 and a server 43. In the current example, the server 43 executes the network access control functions and thus, network 36 is referred to as a "thin access point" network.

As illustrated in Figure 4, the server 43 has stored thereon a list of acceptable access points 45. The server 43 may also have a list of rogue access points 46 stored thereon. In the current example, the list of acceptable access points 45 includes information associated with access point 42a and the list of rogue access points 46 includes information associated with access point 39.

The information includes the service set identifier (SSID) associated with each access point. More specifically in the current example, the list of acceptable access points 45 includes the ESSID (i.e., "default") and BSSID (i.e., XX:XX:XX:XX:XX:XX) that is associated with access point 42a (which the electronic device 4 may employ to access the network 36). The list of rogue access points 46 includes the ESSID (i.e., "tsunami") and BSSID (i.e., WW:WW:WW:WW:WW:WW) that is associated with access point 39 (which the electronic device 4 may not employ to access the network 36).

The list of acceptable access points 45 is "pushed down" to and stored on the electronic device 4 as a copy 45a when the electronic device 4 first accesses the network 36 (e.g., the first instance that the electronic device accesses the network 45) and/or is stored as a copy 45a when the electronic device 4 is configured by a network administrator. Likewise, the list of rogue access points 46 is also pushed down to and stored on the electronic device 4 as copy 46b when the electronic device 4 first accesses the network 36 and/or is stored as a copy 46a when the electronic device 4 is configured by a network administrator.

The electronic device 4 continuously probes the network 36 and may attempt to roam (i.e., switch) from one access point to another access point. Assume, for example, that electronic device 4 is in a location that is close to access point 42a and that electronic device 4 is actually accessing the network 36 via access point 42a (which is an acceptable access point). Next assume that electronic device 4 is moved away from access point 42a towards the other access points 39, 42b - 42c, 47 such that the radio signals between access point 42a and the electronic device 4 begin to decrease in strength while the radio signals between access points 39, 42b - 42c, 47 and the electronic device 4 begin to increase in strength. Although the discussion of the current example is limited to the electronic device 4 detecting and gathering information about access points, it should be noted that one access point can detect and gather information about another access point and use this information to determine whether the other access point is an acceptable or a rogue access point.

As the electronic device 4 probes the network, it detects the other access points (i.e., access points 39, 42b - 42c, 47) and gathers information (e.g., the ESSID and BSSID) associated with them. The network 36, however, is structured to hinder the electronic device 4 from accessing the server 43 via access points that are not contained within the copy 45 a of the list of acceptable access points 45 and/or which are contained with the copy 46a of the list of rogue access points 46. Accordingly, the electronic device compares the information gathered about the access points 39, 42b - 42c, 47 to the copy 45a of the list of acceptable access points 45 and to the copy 46b of the list of rogue access points 46 and determines whether any of the detected access devices (i.e., 39, 42b - 42c, 47) are allowable access points and/or are rogue access points. At this point in the current example, only access point 42a is contained within the copy 45a of the list of acceptable access points 45. Access device 39 is within the copy 46a of the list of rogue access points 46 and thus may not be used by the electronic device 4 to access the network 36.

The electronic device 4 transmits the information gathered about the remaining access points 42b - 42c, 47 to the server 43. The server 43 makes a determination as to whether access points 42b - 42c, 47 are acceptable access points or rogue access points. If the server 43 determines that an access point is acceptable, the list of acceptable access points 45 is updated on the server by adding information associated with the newly determined acceptable access point. If the server 43 determines that an access point is a rogue access point, the list of rogue access points 46 is updated on the server 43 by adding information associated with the newly determined rogue access point.

It should be noted that a previously acceptable access point may be turned into a rogue access point at anytime, for example, if a clone of the previously acceptable access point is detected. In this instance, the ESSID and BSSID of the previously acceptable access point is removed from the list of acceptable access points 45 and added to the list of rogue access points 46. The updated lists are then pushed down to the client 4. A client 4 that was accessing the network via the previously acceptable access point at the time the updated lists are pushed down may be forced to disconnect from that previously acceptable access point.

It should further be noted that the information used to by the server 43 to update the list of acceptable access points 45 and/or the list of rogue access points 46 may be obtained from other electronic devices 4 that have access to the network 36.

In addition to hindering the client 4 from accessing the network 36 via a rogue access point as discussed above, other actions may be performed on/by the network 36 in response to detecting a rogue access point. Other actions that may be performed include, for example and without limitation, updating the list of acceptable access points 45 stored on the client 4, updating the list of rogue access points 46 stored on the client 4, continuously issuing disassociation requests from trusted access points such that any client 4 wishing to associate with the network 35 will continually be instructed to disassociate with a rogue access point (e.g., 39, 40b, and 47), flooding the rogue access point (e.g., 39, 40b, and 47), and locating the rogue access point (e.g., 39, 40b, and 47) through triangulation. Although both a list of acceptable access points 45 and a list of rogue access points 46 are used in the current example, the list of acceptable access points 45 or the list of rogue access points 46 may be solely employed while remaining within the scope of the present invention.

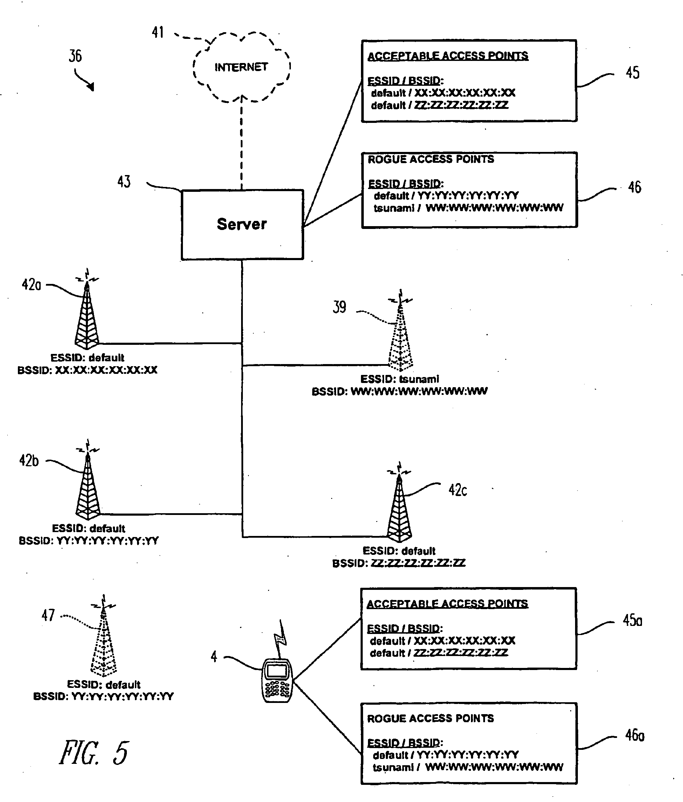

Returning to the current example, Figure 5 illustrates server 43 as having determined that access point 42c is acceptable and that access points 42b and 47 are not acceptable. More specifically, the ESSID information (i.e., "default") and BSSID information (i.e., ZZ:ZZ:ZZ:ZZ:ZZ:ZZ) associated with access point 42c has been added to the list of acceptable access points 45. Likewise, the ESSID information (i.e., "default") and BSSID information (i.e., YY:YY:YY:YY:YY:YY) associated with access point 42b and access point 47 have been added to the list of rogue access points 46. In the current example, access point 47 represents an access point that has been configured to mimic/clone access point 42b.

Figure 5 further illustrates that the server 43 has communicated the updated list of acceptable access points 45 and the updated list of rogue access points 46 to the electronic device 4. More specifically, the updated list of acceptable access points 45 is pushed down to and stored on the electronic device 4 as updated copy 45a, and the updated list of rogue access points 46 is pushed down to and stored on the electronic device 4 as updated copy 46b. Accordingly, electronic device 4 may now access the network 36 via access points 42a and 42c. It should be noted that the updated list of acceptable access points 45 and the updated list of rogue access points 46 may also be pushed down to and stored as copy 45a and copy 46a, respectively, on other electronic devices 4 that have access to, or which attempt to access, the network 36. The copy 45a and copy 46a govern the behavior of these electronic devices 4.

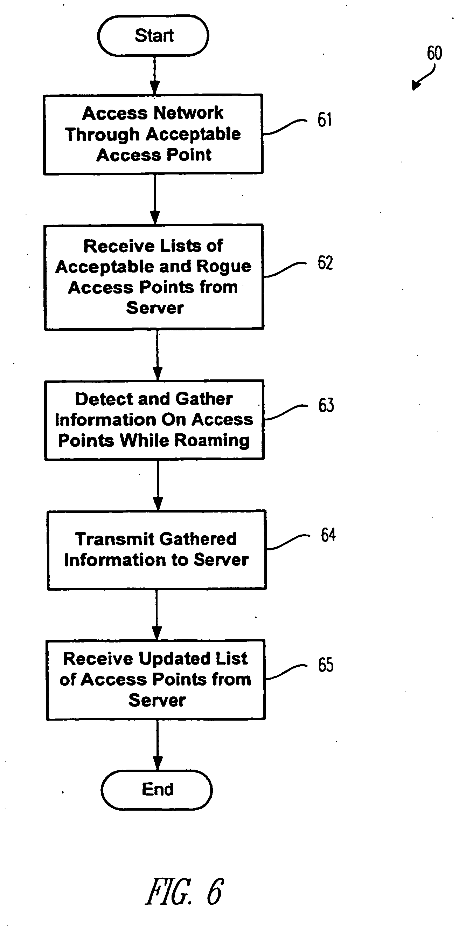

Figure 6 illustrates an operation 60 for securing the network 36 illustrated in Figures 4 and 5. Operation 60 begins, for example, when an electronic device 4 (i.e., a client) first attempts to access the network 36. In operational step 61, the electronic device 4 accesses network 36 through an acceptable access point (e.g., access point 42a). The electronic device 4 may be configured by the network administrator, for example, such that a default list of acceptable access points 45 is stored on the electronic device 4 prior to attempting to access the network 36 at operation 61.

Once access to the network 36 is completed in operational step 61, a copy 45a of the list of acceptable access points 45 and a copy 46a of the list of rogue access points 46 is pushed down from the server 43 and stored on the electronic device 4 in operational step 62. For example, the copy 45a of the list of acceptable access points 45 and the copy 46a of the list of rogue access points 46 as shown in Figure 4 is pushed down to the electronic device 4.

At operational step 63, the electronic device 4 detects and gathers information related to access points within range of the electronic device 4. In the current embodiment, for example, detection and gathering occur continuously as the electronic device 4 probes the network 36. It should be noted, however, that the electronic device 4 may detect and gather the information related to the access point in a non-continuous manner, for example, only at times when the electronic device 4 attempts to roam from a first access point to another access point.

At operational step 64, the electronic device 4 transmits the information gathered about the other access points to server 43. In one embodiment, only information missing from or different from the information contained in the copy 45a of the list of acceptable access points 45 and/or the copy 46a of the updated list of rogue access points 46 may be sent to the server 43. In the current example for instance, information associated with access point 42b, access point 42c, and access point 47 is sent to server 43. Server 43 uses this information to determine whether the other access points (e.g., 42b - 42c, 47) are acceptable access points or rogue access points. Server 43 updates the list of acceptable access points 45 and updates the list of rogue access points 46 as necessary.

At operational step 65, the electronic device 4 receives the updated list of acceptable access points 45 and the updated list of rogue access points 46 from the server 43. A copy 45a of the updated list of acceptable access points 45 and a copy 46a of the updated list of rogue access points 46 are stored on the electronic device 4. Accordingly, the updated list of acceptable access points 45 (and its copy 45a) and the updated list of rogue access points 46 (and its copy 46a) are now used to control access to the network 36 by the electronic device 4. For example as illustrated in Figure 5, the electronic device 4 can roam from allowable access point 42a to allowable access point 42c to access the network 36.

It should be noted that the updated list of acceptable access points 45 and the updated list of rogue access points 46 may also be transmitted to other electronic devices that have access to the network 36 or which attempt to access the network 36. It should further be noted that the updated list of acceptable access points 45 and the updated list of rogue access points 46 which are pushed down to the electronic device 4 may contain information associated with access points that were detected by another electronic device.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the claims appended.

## Claims

1. A method for securing a network (35, 36), comprising:
detecting a number of access points (39, 40a - 40c, 42a - 42c, 44, 47);
gathering information related to at least some of said number of access points (39, 40a - 40c, 42a - 42c, 44, 47);
comparing one of said at least some of said number of access points (39, 40a - 40c, 42a - 42c, 44, 47) to a list of access points (45a, 46a) determined to be acceptable access points (40a, 40c, 42a, 42c) and/or a list of access points determined to be rogue access points (39, 40b, 42b, 44, 47), stored on at least some of a number of clients (4);
determining that said one of said at least some of said number of access points (39, 40a - 40c, 42a - 42c, 44, 47) is a rogue access point (39, 40b, 42b, 44. 47); and
responsive to said determining, performing an action on said network (35, 36) and/or at least some of said number of clients (4).

2. The method of Claim 1 wherein said detecting a number of access points (39, 40a - 40c, 42a - 42c, 44, 47) includes detecting at least some of said number of access points (39, 40a - 40c, 42a - 42c, 44, 47) with said at least some of a number of clients (4).

3. The method of Claim 1 wherein said gathering information related to at least some of said number of access points (39, 40a - 40c, 42a - 42c, 44, 47) includes gathering information related to a first one of said at least some of said number of access points (39, 40a - 40c, 42a - 42c, 44, 47) with at least one of said at least some of a number of clients (4) and another one of said at least some of said number of access points (39, 40a - 40c, 42a - 42c, 44, 47).

4. The method of Claim I wherein said comparing one of said at least some of said number of access points (39,40a - 40c, 42a - 42c, 44, 47) to a list of access points (45, 45a, 46, 46a) occurs at least one of when said at least some of a number of clients (4) attempt to connect to said network (35, 36) and attempts to roam from a first access point (40a, 40c, 42a, 42c,) to said one of said at least some of said number of access points (39, 40a - 40c, 42a - 42c, 44, 47).

5. The method of Claim 1 further comprising updating said list of access points (45, 45a, 46, 46a) in response to said gathered information.

6. The method of Claim 5 wherein said updating said list of access points (45, 45a, 46, 46a) includes:
transmitting a signal representative of at least some of said information from said at least some of a number of clients (4) to said server (43); and
responsive to said transmitting, updating on said server (43) said list of access points (45, 45a, 46, 46a) to generate an updated list of access points (45, 45a, 46, 46a).

7. The method of Claim 6 further comprising communicating to said at least some of a number of clients (4) a signal representative of at least a portion of said updated list of access points (45, 45a, 46, 46a).

8. The method of Claim 1 further comprising generating at least one of a list of acceptable access points (45,45a) and a list of rogue access points (46,46a).

9. The method of Claim 8 wherein generating a list of acceptable access points (45,45a) comprises:
determining that each of at least some of a number of access points (39, 40a - 40c, 42a - 42c, 44, 47) is an acceptable access point (40a, 40c, 42a, 42c); and
adding at least a first said acceptable access point (40a, 40c, 42a, 42c) to said list of acceptable access points (45,45a).

10. The method of Claim 9 wherein said generating a list of acceptable access points (45,45a) further comprises listing at least one of an extended service set identifier associated with said at least a first said acceptable access point (40a, 40c, 42a, 42c) and a basic service set identifier associated with said at least a first said acceptable access point (40a, 40c, 42a, 42c).

11. The method of Claim 8 wherein generating a list of rogue access points (46,46a) comprises:
determining that at least a first access point from among a number of access points (39,40a - 40c, 42a - 42c, 44, 47) is a rogue access point (39, 40b, 42b, 44, 47); and
adding said rogue access point (39, 40b, 42b, 44, 47) to said list of rogue access points (46,46a).

12. The method of Claim 1 wherein said gathering information related to at least some of said number of access points (39, 40a- 40c, 42a - 42c, 44, 47) includes gathering, for each access point of said at least some of said number of access points (39, 40a - 40c, 42a - 42c, 44, 47), at least one of an extended service set identifier and a basic service set identifier associated with said access point.

13. The method of Claim 12 wherein said comparing one of said at least some of said number of access points (39, 40a - 40c, 42a - 42c, 44, 47) to a list of access points (45, 45a, 46, 46a) includes comparing a service set identifier associated with said one of said at least some of said number of access points (39, 40a - 40c, 42a - 42c, 44, 47) to a service set identifier associated with an acceptable access point (40a, 40c, 42a, 42c).

14. The method of Claim 1 wherein said performing an action includes at least one of hindering at least one of said number of clients (4) from accessing said network (35, 36) via said rogue access point (39, 40b, 42b, 44, 47), updating a list of acceptable access points (45a) stored on at least one of said number of clients (4), updating a list of rogue access points (46a) stored on at least one of said number of clients (4), continuously issuing disassociation requests from trusted access points, flooding said rogue access point (39, 40b, 42b, 44, 47), and locating said rogue access point (39, 40b, 42b, 44, 47) through triangulation.

15. The method of Claim 14 wherein said hindering comprises limiting access to said network (35, 36) by at least one of said number of clients (4) to acceptable access points (40a, 40c, 42a, 42c).

16. A network (35, 36) comprising:
a number of access points (39, 40a - 40c, 42a - 42c, 44, 47);
a device (43) having stored thereon a list of access points (45) determined to be acceptable access points (40a, 40c, 42a, 42c) and/or a list of access points (46) determined to be rogue access points (39, 40b, 42b, 44, 47); and
a client (4) having stored thereon said list of access points (45a) determined to be acceptable access points (40a, 40c, 42a, 42c) and/or said list of access points (46a) determined to be rogue access points (39, 40b, 42b, 44, 47);
wherein said network (35, 36) is structured to enable communication between said device (43) and said client (4) through at least one of said number of access points determined to be acceptable access points (40a, 40c, 42a, 42c), and wherein said network (35, 36) is structured to hinder said client (4) from accessing said device (43) through at least one of said number of access points determined to be a rogue access point (39, 40b, 42b, 44, 47).

17. The network (35, 36) of Claim 16 wherein said device (43) is structured to generate and communicate to said client (4) at least one of said list of access points determined to be acceptable access points (45) and said list of access points determined to be rogue access points (46), each of at least some of said number of access points determined to be acceptable access points (40a, 40c, 42a, 42c) and each of said number of access points determined to be rogue access points (39, 40b, 42b, 44, 47) having at least one of an extended service set identifier and a basic service set identifier associated therewith.

18. The network (35, 36) of Claim 17 wherein said device (43) is structured to make a comparison between a prospective access point and said list of access points determined to be acceptable access points (45), and responsive to said comparison, determine that said prospective access point is an acceptable access point (40a, 40c, 42a, 42c).

19. The network (35, 36) of Claim 17 wherein said device (43) is structured to make a comparison between a prospective access point and said list of access points determined to be rogue access points (46), and responsive to said comparison, determine that said prospective access point is a rogue access point (39, 40b, 42b, 44, 47).

20. The network (35, 36) of Claim 16 wherein said client (4) includes at least one of said list of access points determined to be acceptable access points (45a) and said list of access points determined to be rogue access points (46a) stored thereon, each access point of at least a portion of said at least one of said list of access points determined to be acceptable access points (45a) and said list of access points determined to be rogue access points (46a) having a service set identifier associated therewith.

21. The network (35,36) of Claim 20 wherein said client (4) is structured to make a comparison between a prospective access points and said list of access points determined to be acceptable access points (45a) and, responsive to said comparison, determine that said prospective access point is an acceptable access point (40a, 40c, 42a, 42c).

22. The network (35, 36) of Claim 20 wherein said client (4) is structured to make a comparison between a prospective access point and said list of access points determined to be rogue access points (46a) and, responsive to said comparison, determine that said prospective access point is a rogue access point (39,40b, 42b, 44, 47).

23. The network (35,36) of Claim 16 wherein said network (35, 36) is structured to hinder said client (4) by at least one of limiting access to said network (35, 36) by the client (4) to acceptable access points (40a, 40c, 42a, 42c), updating at least one of said a list of access points determined to be acceptable access point (45) and a list of access points determined to be rogue access points (46) stored on said device (43), updating at least one of said a list of access points determined to be acceptable access points (45a) and a list of access points determined to be rogue access points (46a) stored on said client (4), flooding said rogue access point (39, 40b, 42b, 44, 47), and locating said rogue access point (39, 40b, 42b, 44,47) through triangulation.

24. The network (35, 36) of Claim 16 wherein said device (43) is one of a server (43) and an access controller.

## Patentansprüche

1. Verfahren zum Sichern eines Netzwerks (35, 36), das aufweist:
Erfassen einer Anzahl von Zugriffspunkten (39, 40a - 40c, 42a - 42c, 44, 47);
Sammeln von Information, die zumindest einige der Anzahl von Zugriffspunkte (39, 40a - 40c, 42a - 42c, 44, 47) betrifft;
Vergleichen von einem von zumindest einigen der Anzahl von Zugriffspunkten (39, 40a - 40c, 42a - 42c, 44, 47) mit einer Liste von Zugriffspunkte (45a, 46a), die als akzeptable Zugriffspunkte (40a, 40c, 42a, 42c) bestimmt sind, und/oder einer Liste von Zugriffspunkten, die als "verbrecherische" Zugriffspunkte (39, 40b, 42b, 44, 47) bestimmt sind, gespeichert auf zumindest einigen einer Anzahl von Clients (4);
Bestimmen, dass der eine der zumindest einigen der Anzahl von Zugriffspunkten (39, 40a - 40c, 42a - 42c, 44, 47) ein verbrecherischer Zugriffspunkt (39, 40b, 42b, 44, 47) ist; und
als Reaktion auf die Bestimmung Durchführen einer Aktion auf dem Netzwerk (35, 36) und/oder zumindest einigen der Anzahl von Clients (4).

2. Verfahren gemäß Anspruch 1, wobei das Erfassen einer Anzahl von Zugriffspunkten (39, 40a - 40c, 42a - 42c, 44, 47) ein Erfassen von zumindest einigen der Anzahl von Zugriffspunkten (39, 40a - 40c, 42a - 42c, 44, 47) mit den zumindest einigen einer Anzahl von Clients (4) umfasst.

3. Verfahren gemäß Anspruch 1, wobei das Sammeln von Information, die zumindest einige der Anzahl von Zugriffspunkten (39, 40a - 40c, 42a - 42c, 44, 47) betrifft, ein Sammeln von Information umfasst, die einen ersten der zumindest einigen der Anzahl von Zugriffspunkten (39, 40a - 40c, 42a - 42c, 44, 47) betrifft, mit zumindest einem der zumindest einigen einer Anzahl von Clients (4) und einem anderen der zumindest einigen der Anzahl von Zugriffspunkten (39, 40a - 40c, 42a - 42c, 44, 47).

4. Verfahren gemäß Anspruch 1, wobei das Vergleichen von einem von zumindest einigen der Anzahl von Zugriffspunkten (39, 40a - 40c, 42a - 42c, 44, 47) mit einer Liste von Zugriffspunkten (45, 45a, 46, 46a) stattfindet, wenn zumindest einige einer Anzahl von Clients (4) versuchen, sich mit dem Netzwerk (35, 36) zu verbinden, und versuchen, von einem ersten Zugriffspunkt (40a, 40c, 42a, 42c) zu dem einen der zumindest einigen der Anzahl von Zugriffspunkten (39, 40a - 40c, 42a - 42c, 44, 47) zu roamen.

5. Verfahren gemäß Anspruch 1, das weiter aufweist ein Aktualisieren der Liste von Zugriffspunkten (45, 45a, 46, 46a) als Reaktion auf die gesammelte Information.

6. Verfahren gemäß Anspruch 5, wobei das Aktualisieren der Liste von Zugriffspunkten (45, 45a, 46, 46a) umfasst:
Senden eines Signals, das repräsentativ ist für zumindest einen Teil der Information von den zumindest einigen einer Anzahl von Clients (4), an den Server (43); und
als Reaktion auf dieses Senden, Aktualisieren auf dem Server (43) der Liste von Zugriffspunkten (45, 45a, 46, 46a), um eine aktualisierte Liste von Zugriffspunkten (45, 45a, 46, 46a) zu erzeugen.

7. Verfahren gemäß Anspruch 6, das weiter aufweist ein Kommunizieren an zumindest einige einer Anzahl von Clients (4) ein Signal, das für zumindest einen Teil der aktualisierten Liste von Zugriffspunkten (45, 45a, 46, 46a) repräsentativ ist.

8. Verfahren gemäß Anspruch 1, das weiter aufweist ein Erzeugen zumindest einer aus einer Liste von akzeptablen Zugriffspunkten (45, 45a) und einer Liste von verbrecherischen Zugriffspunkten (46, 46a).

9. Verfahren gemäß Anspruch 8, wobei ein Erzeugen einer Liste von akzeptablen Zugriffspunkten (45, 45a) aufweist:
Bestimmen, dass jeder von zumindest einigen einer Anzahl von Zugriffspunkten (39, 40a - 40c, 42a - 42c, 44, 47) ein akzeptabler Zugriffspunkt (40a, 40c, 42a, 42c) ist; und
Hinzufügen von zumindest einem ersten akzeptablen Zugriffspunkt (40a, 40c, 42a, 42c) zu der Liste von akzeptablen Zugriffspunkten (45, 45a).

10. Verfahren gemäß Anspruch 9, wobei das Erzeugen einer Liste von akzeptablen Zugriffspunkten (45, 45a) weiter aufweist ein Auflisten von zumindest einem eines erweiterten Dienstsatzidentifizierers, der zu dem zumindest ersten akzeptablen Zugriffspunkt (40a, 40c, 42a, 42c) gehört, und eines grundlegenden Dienstsatzidentifizierers, der zu dem zumindest ersten akzeptablen Zugriffspunkt (40a, 40c, 42a, 42c) gehört.

11. Verfahren gemäß Anspruch 8, wobei ein Erzeugen einer Liste von verbrecherischen Zugriffspunkten (46, 46a) aufweiset:
Bestimmen, dass zumindest ein erster Zugriffspunkt aus einer Anzahl von Zugriffspunkten (39, 40a - 40c, 42a - 42c, 44, 47) ein verbrecherischer Zugriffspunkt (39, 40b, 42b, 44, 47) ist; und
Hinzufügen des verbrecherischen Zugriffspunkts (39, 40b, 42b, 44, 47) zu der Liste von verbrecherischen Zugriffspunkten (46, 46a).

12. Verfahren gemäß Anspruch 1, wobei das Sammeln von Information, die zumindest einige der Anzahl von Zugriffspunkten (39, 40a - 40c, 42a - 42c, 44, 47) betrifft, umfasst ein Sammeln, für jeden Zugriffspunkt von den zumindest einigen der Anzahl von Zugriffspunkten (39, 40a - 40c, 42a - 42c, 44, 47), von zumindest einem aus einem erweiterten Dienstsatzidentifizierers und einem grundlegenden Dienstsatzidentifizierers, die zu dem Zugriffspunkt gehören.

13. Verfahren gemäß Anspruch 12, wobei das Vergleichen eines der zumindest einigen der Anzahl von Zugriffspunkten (39, 40a - 40c, 42a - 42c, 44, 47) mit einer Liste von Zugriffspunkten (45, 45a, 46, 46a) ein Vergleichen eines Dienstsatzidentifizierers, der zu dem einen der zumindest einigen der Anzahl von Zugriffspunkten (39, 40a - 40c, 42a - 42c, 44, 47) gehört, mit einem Dienstsatzidentifizierer, der zu einem akzeptablen Zugriffspunkt (40a, 40c, 42a, 42c) gehört, umfasst.

14. Verfahren gemäß Anspruch 1, wobei das Durchführen einer Aktion umfasst zumindest eines aus Hindern zumindest eines der Anzahl von Clients (4) vom Zugreifen auf das Netzwerk (35, 36) über den verbrecherischen Zugriffspunkt (39, 40b, 42b, 44, 47), Aktualisieren einer Liste von akzeptablen Zugriffspunkten (45a), die auf zumindest einem der Anzahl von Clients (4) gespeichert ist, Aktualisieren einer Liste von verbrecherischen Zugriffspunkten (46a), die auf zumindest einem der Anzahl von Clients (4) gespeichert ist, kontinuierliches Ausgeben von Trennungs-Anforderungen von vertrauenswürdigen Zugriffspunkten, Fluten des verbrecherischen Zugriffspunkts (39, 40b, 42b, 44, 47) und Lokalisieren des verbrecherischen Zugriffspunkts (39, 40b, 42b, 44, 47) durch Triangulation.

15. Verfahren gemäß Anspruch 14, wobei das Hindern aufweist ein Begrenzen eines Zugangs zu dem Netzwerk (35, 36) durch zumindest einen der Anzahl von Clients (4) auf akzeptable Zugriffspunkte (40a, 40c, 42a, 42c).

16. Netzwerk (35, 36), das aufweist:
eine Anzahl von Zugriffspunkten (39, 40a - 40c, 42a - 42c, 44, 47);
eine Vorrichtung (43), auf der gespeichert ist eine Liste von Zugriffspunkten, (45), die als akzeptable Zugriffspunkte (40a, 40c, 42a, 42c) bestimmt sind, und/oder eine Liste von Zugriffspunkten (46), die als verbrecherische Zugriffspunkte (39, 40b, 42b, 44, 47) bestimmt sind; und
einen Client (4), auf dem gespeichert ist die Liste von Zugriffspunkten (45a), die als akzeptable Zugriffspunkte (40a, 40c, 42a, 42c) bestimmt sind, und/oder die Liste von Zugriffspunkten (46a), die als verbrecherische Zugriffspunkte (39, 40b, 42b, 44, 47) bestimmt sind;
wobei das Netzwerk (35, 36) strukturiert ist, eine Kommunikation zu ermöglichen zwischen der Vorrichtung (43) und dem Client (4) durch zumindest einen der Anzahl von Zugriffspunkten, die als akzeptable Zugriffspunkte (40a, 40c, 42a, 42c) bestimmt sind, und wobei das Netzwerk (35, 36) strukturiert ist, den Client (4) daran zu hindern, auf die Vorrichtung (43) zuzugreifen durch zumindest einen der Anzahl von Zugriffspunkten, die als ein verbrecherischer Zugriffspunkt (39, 40b, 42b, 44, 47) bestimmt sind.

17. Netzwerk (35, 36) gemäß Anspruch 16, wobei die Vorrichtung (43) strukturiert ist, zumindest eine der Liste von Zugriffspunkten, die als akzeptable Zugriffspunkten (45) bestimmt sind, und der Liste von Zugriffspunkten, die als verbrecherische Zugriffspunkte (46) bestimmt sind, zu erzeugen und an den Client (4) zu kommunizieren, wobei jeder von zumindest einigen der Anzahl von Zugriffspunkten, die als akzeptable Zugriffspunkte (40a, 40c, 42a, 42c) bestimmt sind, und jeder der Anzahl von Zugriffspunkten, die als verbrecherische Zugriffspunkte (39, 40b, 42b, 44, 47) bestimmt sind, zumindest einen aus einem erweiterten Dienstsatzidentifizierer und einem grundlegenden Dienstsatzidentifizierer haben, die dazu gehören.

18. Netzwerk (35, 36) gemäß Anspruch 17, wobei die Vorrichtung (43) strukturiert ist, einen Vergleich durchzuführen zwischen einem voraussichtlichen Zugriffspunkt und der Liste von Zugriffspunkten, die als akzeptable Zugriffspunkte (45) bestimmt sind, und als Reaktion auf den Vergleich zu bestimmen, dass dieser voraussichtliche Zugriffspunkt ein akzeptabler Zugriffspunkt (40a, 40c, 42a, 42c) ist.

19. Netzwerk (35, 36) gemäß Anspruch 17, wobei die Vorrichtung (43) strukturiert ist, einen Vergleich durchzuführen zwischen einem voraussichtlichen Zugriffspunkt und der Liste von Zugriffspunkten, die als verbrecherische Zugriffspunkte (46) bestimmt sind, und als Reaktion auf den Vergleich zu bestimmen, dass dieser voraussichtliche Zugriffspunkt ein verbrecherischer Zugriffspunkt (39, 40b, 42b, 44, 47) ist.

20. Netzwerk (35, 36) gemäß Anspruch 16, wobei der Client (4) zumindest eine aus der Liste von Zugriffspunkten, die als akzeptable Zugriffspunkte (45a) bestimmt sind, und der Liste von Zugriffspunkten, die als verbrecherische Zugriffspunkte (46a) bestimmt sind, darauf gespeichert umfasst, wobei jeder Zugriffspunkt von zumindest einem Teil der zumindest einen der Liste von Zugriffspunkten, die als akzeptable Zugriffspunkte (45a) bestimmt sind, und der Liste von Zugriffspunkten, die als verbrecherische Zugriffspunkte (46a) bestimmt sind, einen dazu gehörigen Dienstsatzidentifizierer hat.

21. Netzwerk (35, 36) gemäß Anspruch 20, wobei der Client (4) strukturiert ist, einen Vergleich durchzuführen zwischen einem voraussichtlichen Zugriffspunkt und der Liste von Zugriffspunkten, die als akzeptable Zugriffspunkte (45) bestimmt sind, und als Reaktion auf den Vergleich zu bestimmen, dass dieser voraussichtliche Zugriffspunkt ein akzeptabler Zugriffspunkt (40a, 40c, 42a, 42c) ist.

22. Netzwerk (35, 36) gemäß Anspruch 20, wobei der Client (4) strukturiert ist, einen Vergleich durchzuführen zwischen einem voraussichtlichen Zugriffspunkt und der Liste von Zugriffspunkten, die als verbrecherische Zugriffspunkte (46a) bestimmt sind, und als Reaktion auf den Vergleich zu bestimmen, dass dieser voraussichtliche Zugriffspunkt ein verbrecherischer Zugriffspunkt (39, 40b, 42b, 44, 47) ist.

23. Netzwerk (35, 36) gemäß Anspruch 16, wobei das Netzwerk (35, 36) strukturiert ist, den Client (4) zu hindern durch zumindest eines aus einem Begrenzen eines Zugriffs auf das Netzwerk (35, 36) durch den Client (4) auf akzeptable Zugriffspunkte (40a, 40c, 42a, 42c), Aktualisieren zumindest einer aus einer Liste von Zugriffspunkten, die als akzeptable Zugriffspunkte (45) bestimmt sind, und einer Liste von Zugriffspunkten, die als verbrecherische Zugriffspunkte (46) bestimmt sind, die auf der Vorrichtung (43) gespeichert sind, Aktualisieren zumindest einer aus der Liste von Zugriffspunkten, die als akzeptable Zugriffspunkte (45a) bestimmt sind, und der Liste von Zugriffspunkten, die als verbrecherische Zugriffspunkte (46a) bestimmt sind, die auf dem Client (4) gespeichert sind, Fluten des verbrecherischen Zugriffspunkts (39, 40b, 42b, 44, 47) und Lokalisieren des verbrecherischen Zugriffspunkts (39, 40b, 42b, 44, 47) durch Triangulation.

24. Netzwerk (35, 36) gemäß Anspruch 16, wobei die Vorrichtung (43) eine aus einem Server (43) und einer Zugriffssteuervorrichtung ist.

## Revendications

1. Procédé de sécurisation d'un réseau (35, 36), consistant à :
détecter un certain nombre de points d'accès (39, 40a-40c, 42a-42c, 44, 47) ;
collecter des informations concernant au moins certains dudit nombre de points d'accès (39, 40a-40c, 42a-42c, 44, 47) ;
comparer l'un desdits au moins certains dudit nombre de points d'accès (39, 40a-40c, 42a-42c, 44, 47) à une liste de points d'accès (45a, 46a) déterminés comme étant des points d'accès acceptables (40a, 40c, 42a, 42c) et/ou à une liste de points d'accès déterminés comme étant des points d'accès non autorisés (39, 40b, 42b, 44, 47), stockées sur au moins certains d'un certain nombre de clients (4) ;
déterminer que ledit un desdits au moins certains dudit nombre de points d'accès (39, 40a-40c, 42a-42c, 44, 47) est un point d'accès non autorisé (39, 40b, 42b, 44, 47) ; et
en réponse à ladite détermination, effectuer une action sur ledit réseau (35, 36) et/ou sur au moins certains dudit nombre de clients (4).

2. Procédé selon la revendication 1, dans lequel ladite détection d'un certain nombre de points d'accès (39, 40a-40c, 42a-42c, 44, 47) consiste à détecter au moins certains dudit nombre de points d'accès (39, 40a-40c, 42a-42c, 44, 47) avec lesdits au moins certains d'un certain nombre de clients (4).

3. Procédé selon la revendication 1, dans lequel ladite collecte d'informations concernant au moins certains dudit nombre de points d'accès (39, 40a-40c, 42a-42c, 44, 47) consiste à collecter des informations concernant un premier desdits au moins certains dudit nombre de points d'accès (39, 40a-40c, 42a-42c, 44, 47) avec au moins l'un desdits au moins certains d'un certain nombre de clients (4) et un autre desdits au moins certains dudit nombre de points d'accès (39, 40a-40c, 42a-42c, 44, 47).

4. Procédé selon la revendication 1, dans lequel ladite comparaison de l'un desdits au moins certains dudit nombre de points d'accès (39, 40a-40c, 42a-42c, 44, 47) à une liste de points d'accès (45, 45a, 46, 46a) se produit lorsqu'au moins l'un desdits au moins certains d'un certain nombre de clients (4) tente de se connecter audit réseau (35, 36) et lorsqu'il tente de se déplacer d'un premier d'accès (40a, 40c, 42a, 42c) vers ledit un desdits au moins certains dudit nombre de points d'accès (39, 40a-40c, 42a-42c, 44, 47).

5. Procédé selon la revendication 1, consistant en outre à mettre à jour ladite liste de points d'accès (45, 45a, 46, 46a) en réponse auxdites informations collectées.

6. Procédé selon la revendication 5, dans lequel ladite mise à jour de ladite liste de points d'accès (45, 45a, 46, 46a) consiste à :
transmettre un signal représentatif d'au moins certaines desdites informations desdits au moins certains d'un certain nombre de clients (4) audit serveur (43) ; et
en réponse à ladite transmission, mettre à jour sur ledit serveur (43) ladite liste de points d'accès (45, 45a, 46, 46a) pour créer une liste mise à jour de points d'accès (45, 45a, 46, 46a).

7. Procédé selon la revendication 6, consistant en outre à communiquer auxdits au moins certains d'un certain nombre de clients (4) un signal représentatif d'au moins une partie de ladite liste mise à jour de points d'accès (45, 45a, 46, 46a).

8. Procédé selon la revendication 1, consistant en outre à générer au moins l'un d'une liste de points d'accès acceptables (45, 45a) et d'une liste de points d'accès non autorisés (46, 46a).

9. Procédé selon la revendication 8, dans lequel la création d'une liste de points d'accès acceptables (45, 45a) consiste à :
déterminer que chacun d'au moins certains d'un certain nombre de points d'accès (39, 40a-40c, 42a-42c, 44, 47) est un point d'accès acceptable (40a, 40c, 42a, 42c) ; et
ajouter au moins un premier desdits points d'accès acceptables (40a, 40c, 42a, 42c) à ladite liste de points d'accès acceptables (45, 45a).

10. Procédé selon la revendication 9, dans lequel ladite création d'une liste de points d'accès acceptables (45, 45a) consiste en outre à établir une liste d'au moins l'un d'un identificateur d'ensemble de services étendus associé audit au moins un premier desdits points d'accès acceptables (40a, 40c, 42a, 42c) et d'un identificateur d'ensemble de services de base associé audit au moins un premier desdits points d'accès acceptables (40a, 40c, 42a, 42c).

11. Procédé selon la revendication 8, dans lequel la création d'une liste de points d'accès non autorisés (46, 46a) consiste à :
déterminer qu'au moins un premier point d'accès parmi un certain nombre de points d'accès (39, 40a-40c, 42a-42c, 44, 47) est un point d'accès non autorisé (39, 40b, 42b, 44, 47) ; et
ajouter ledit point d'accès non autorisé (39, 40b, 42b, 44, 47) à ladite liste de points d'accès non autorisés (46, 46a).

12. Procédé selon la revendication 1, dans lequel ladite collecte d'informations concernant au moins certains dudit nombre de points d'accès (39, 40a-40c, 42a-42c, 44, 47) consiste à collecter, pour chaque point d'accès desdits au moins certains dudit nombre de points d'accès (39, 40a-40c, 42a-42c, 44, 47), au moins l'un d'un identificateur d'ensemble de services étendus et d'un identificateur d'ensemble de services de base associés audit point d'accès.

13. Procédé selon la revendication 12, dans lequel ladite comparaison desdits au moins certains dudit nombre de points d'accès (39, 40a-40c, 42a-42c, 44, 47) à une liste de points d'accès (45, 45a, 46, 46a) consiste à comparer un identificateur d'ensemble de services associé audit un desdits au moins certains dudit nombre de points d'accès (39, 40a-40c, 42a-42c, 44, 47) à un identificateur d'ensemble de services associé à un point d'accès acceptable (40a, 40c, 42a, 42c).

14. Procédé selon la revendication 1, dans lequel ladite exécution d'une action comprend au moins l'une d'une action consistant à empêcher au moins l'un dudit nombre de clients (4) d'accéder audit réseau (35, 36) par l'intermédiaire dudit point d'accès non autorisé (39, 40b, 42b, 44, 47), à mettre à jour une liste de points d'accès acceptables (45a) stockés sur au moins l'un dudit nombre de clients (4), à mettre à jour une liste de points d'accès non autorisés (46a) stockés sur au moins l'un dudit nombre de clients (4), à émettre en continu des demandes de dissociation depuis des points d'accès sécurisés, à engorger ledit point d'accès non autorisé (39, 40b, 42b, 44, 47) et à localiser ledit point d'accès non autorisé (39, 40b, 42b, 44, 47) par triangulation.

15. Procédé selon la revendication 14, dans lequel ladite action d'empêchement consiste à limiter l'accès audit réseau (35, 36) d'au moins l'un dudit nombre de clients (4) à des points d'accès acceptables (40a, 40c, 42a, 42c).

16. Réseau (35, 36) comprenant :
un certain nombre de points d'accès (39, 40a-40c, 42a-42c, 44, 47) ;
un dispositif (43) sur lequel sont stockées une liste de points d'accès (45) déterminés comme étant des points d'accès acceptables (40a, 40c, 42a, 42c) et/ou une liste de points d'accès (46) déterminés comme étant des points d'accès non autorisés (39, 40b, 42b, 44, 47) ; et
un client (4) sur lequel sont stockées ladite liste de points d'accès (45a) déterminés comme étant des points d'accès acceptables (40a, 40c, 42a, 42c) et/ou ladite liste de points d'accès (46a) déterminés comme étant des points d'accès non autorisés (39, 40b, 42b, 44, 47) ;
dans lequel ledit réseau (35, 36) est conçu pour permettre une communication entre ledit dispositif (43) et ledit client (4) par l'intermédiaire d'au moins l'un dudit nombre de points d'accès déterminés comme étant des points d'accès acceptables (40a, 40c, 42a, 42c), et dans lequel ledit réseau (35, 36) est conçu pour empêcher ledit client (4) d'accéder audit dispositif (43) par l'intermédiaire d'au moins l'un dudit nombre de points d'accès déterminés comme étant des points d'accès non autorisés (39, 40b, 42b, 44, 47).

17. Réseau (35, 36) selon la revendication 16, dans lequel ledit dispositif (43) est conçu pour créer et communiquer audit client (4) au moins l'une de ladite liste de points d'accès déterminés comme étant des points d'accès acceptables (45) et de ladite liste de points d'accès déterminés comme étant des points d'accès non autorisés (46), chacun d'au moins certains dudit nombre de points d'accès déterminés comme étant des points d'accès acceptables (40a, 40c, 42a, 42c) et chacun dudit nombre de points d'accès déterminés comme étant des points d'accès non autorisés (39, 40b, 42b, 44, 47) ayant au moins l'un d'un identificateur d'ensemble de services étendus et d'un identificateur d'ensemble de services de base associés à ceux-ci.

18. Réseau (35, 36) selon la revendication 17, dans lequel ledit dispositif (43) est conçu pour effectuer une comparaison entre un point d'accès prospectif et ladite liste de points d'accès déterminés comme étant des points d'accès acceptables (45) et, en réponse à ladite comparaison, pour déterminer que ledit point d'accès prospectif est un point d'accès acceptable (40a, 40c, 42a, 42c).

19. Réseau (35, 36) selon la revendication 17, dans lequel ledit dispositif (43) est conçu pour effectuer une comparaison entre un point d'accès prospectif et ladite liste de points d'accès déterminés comme étant des points d'accès non autorisés (46) et, en réponse à ladite comparaison, pour déterminer que ledit point d'accès prospectif est un point d'accès non autorisé (39, 40b, 42b, 44, 47).

20. Réseau (35, 36) selon la revendication 16, dans lequel ledit client (4) comprend au moins l'une de ladite liste de points d'accès déterminés comme étant des points d'accès acceptables (45a) et de ladite liste de points d'accès déterminés comme étant des points d'accès non autorisés (46a) stockées sur celui-ci, chaque point d'accès d'au moins une partie de ladite au moins une de ladite liste de points d'accès déterminés comme étant des points d'accès acceptables (45a) et de ladite liste de points d'accès déterminés comme étant des points d'accès non autorisés (46a), ayant un identificateur d'ensemble de services associé à celui-ci.

21. Réseau (35, 36) selon la revendication 20, dans lequel ledit client (4) est conçu pour effectuer une comparaison entre un point d'accès prospectif et ladite liste de points d'accès déterminés comme étant des points d'accès acceptables (45a) et, en réponse à ladite comparaison, pour déterminer que ledit point d'accès prospectif est un point d'accès acceptable (40a, 40c, 42a, 42c).

22. Réseau (35, 36) selon la revendication 20, dans lequel ledit client (4) est conçu pour effectuer une comparaison entre un point d'accès prospectif et ladite liste de points d'accès déterminés comme étant des points d'accès non autorisés (46a) et, en réponse à ladite comparaison, pour déterminer que ledit point d'accès prospectif est un point d'accès non autorisé (39, 40b, 42b, 44, 47).

23. Réseau (35, 36) selon la revendication 16, dans lequel ledit réseau (35, 36) est conçu pour restreindre ledit client (4) par au moins l'une d'une action consistant à limiter l'accès du client (4) audit réseau (35, 36) à des points d'accès acceptables (40a, 40c, 42a, 42c), à mettre à jour au moins l'une de ladite liste de points d'accès déterminés comme étant des points d'accès acceptables (45) et d'une liste de points d'accès déterminés comme étant des points d'accès non autorisés (46) stockées sur ledit dispositif (43), à mettre à jour au moins l'une de ladite liste de points d'accès déterminés comme étant des points d'accès acceptables (45a) et de ladite liste de points d'accès déterminés comme étant des points d'accès non autorisés (46a) stockées sur ledit client (4), à engorger ledit point d'accès non autorisé (39, 40b, 42b, 44, 47) et à localiser ledit point d'accès non autorisé (39, 40b, 42b, 44, 47) par triangulation.

24. Réseau (35, 36) selon la revendication 16, dans lequel ledit dispositif (43) est l'un d'un serveur (43) et d'une unité de contrôle d'accès.
